# EUROPÄISCHE PATENTSCHRIFT

(11) **EP 4 035 972 B1**
(45) Veröffentlichungstag und Bekanntmachung des Hinweises auf die Patenterteilung: **29.07.2026**
(21) Anmeldenummer: 22153369.8
(22) Anmeldetag: 26.01.2022
(51) Int. Cl.: B62B 3/06, B66F 9/12

(54) **FLURFÖRDERZEUG MIT RADARMSPITZEN**
INDUSTRIAL TRUCK WITH SUPPORT ARM TIPS
CHARIOT DE MANUTENTION POURVU DE POINTES DE LONGERON

(30) Priorität: 29.01.2021 DE 102021102060
(43) Veröffentlichungstag der Anmeldung: 03.08.2022
(73) Patentinhaber: Jungheinrich Aktiengesellschaft, 22047 Hamburg (DE)
(72) Erfinder: Schüler, Michael, 24558 Wakendorf (DE); Lohmann, Helmut, 27404 Nartum-Gyhum (DE); Brunckhorst, Holger, 22844 Norderstedt (DE)
(74) Vertreter: Hauck Patent- und Rechtsanwälte PartmbB

(56) Entgegenhaltungen:
- DE-A1- 102006 039 758
- DE-A1- 4 211 029
- DE-U- 7 540 104
- US-A- 2 498 504

## Beschreibung

Die vorliegende Erfindung betrifft ein Flurförderzeug, dessen Radarme mit Radarmspitzen ausgestattet sind.

Im praktischen Einsatz von Flurförderzeugen mit Radarmen hat sich herausgestellt, dass eine Lastaufnahme mit diesen Fahrzeugen in Längsrichtung oder in Querrichtung einer Palette erfolgen kann. Üblicherweise sind Paletten in Querrichtung hierbei mit bodennahen Querbrettern ausgestattet, die von den Radarmen überfahren werden müssen. Hierbei tritt das Problem auf, dass die Gabelzinkenspitze oder deren Lastrad die Palette mit dem Querbrett vor sich herschiebt. Insbesondere bei leeren Paletten, die also nicht durch ein entsprechendes Gewicht belastet sind, tritt so der Fall auf, dass die leere Palette mit ihrem Querbrett nicht überwunden werden kann, sondern diese Palette vor sich hergeschoben wird. Bedenkt man, dass eine stabile Lastrolle für das Flurförderzeug unumgänglich ist, so entsteht aus dieser Situation eine Reihe von technischen Problemen. Aus dem Stand der Technik sind einige Lösungsansätze bekannt.

Aus DE 42 11 029 A1 ist ein Gabelhubwagen mit auf Lastrollen abgestützten, anhebbaren Gabeln bekannt geworden. Die Gabeln weisen eine sogenannte Kletterhilfe auf, die aus einer gradlinigen Abschrägung in vertikaler Richtung gebildet wird. Die Kletterhilfen bilden ein wirkungsvolles Mittel, mit dem ein Hindernis, beispielsweise in Form eine querliegenden Bodenbretts überwunden werden kann, da sich die Gabelspitze hier aufschiebt. Es ist bekannt, dass der Neigungswinkel der Kletterhilfen A und B und die Aufstandsflächen zwischen den Kletterhilfen so bemessen sind, dass die zum Einschieben und Ausschieben der Gabel notwendigen Kräfte gering sind und die Palette durch das Gewicht der Gabel festgehalten wird. Als nachteilig hat sich herausgestallt, dass im Bereich einer Lagerung der Lastrolle die Gabelzinke an dem Querbrett hängen bleibt, sowohl beim Einfahren in die Palette als auch beim Ausfahren aus der abgestellten Palette.

Aus DE 10 2014 107 082 A1 ist ein Flurförderzeug mit einer Rampenhubfunktion bekannt geworden. Hierbei ist ein hydraulisch getrenntes Hydrauliksystem für einen Initialhub vorgesehen.

Aus DE 10 2006 039 758 A1 ist eine Radarmspitze bekannt, die eine abgerundete Spitze aufweist, die in zwei parallel verlaufende Seitenwände übergeht. Im Bereich zum Übergang zu dem Radarm mit seinem U-förmigen Profil kommt es zu einem fertigungsbedingten Querschnittsansprung, in dem das Lager für die Lastrolle vorgesehen ist. Auch bei dieser Radarmspitze kann die Situation auftreten, dass nach einem Überfahren eines ersten Querbretts oder beim Überfahren eines Querbretts beim Herausziehen der Radarme aus einer querstehenden Palette, Störkräfte auftreten, die ein Überfahren der Querbretter erschweren.

Aus DE 75 40 104 ist eine Radarmspitze für ein Flurförderzeug bekannt, bei dem eine relativ dünne Seitenwand durch eine von außen angesetzte Gleitkufe verstärkt ist.

Der Erfindung liegt die Aufgabe zugrunde, ein Flurförderzeug mit Radarmen und Radarmspitzen bereitzustellen, die mit einfachen Mitteln ein problemloses Überfahren von Querbalken in der Palette sicherstellen.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist insbesondere als ein Hubwagen ausgebildet und besitzt einen Antriebsteil sowie ein Lastteil. Das Lastteil ist gegenüber dem Antriebsteil in der Höhe verstellbar und kann angehoben werden. Das Lastteil weist zwei Radarme auf, die an ihrem jeweils freien Ende mindestens eine Lastrolle aufweisen. Jeder der Radarme besitzt an seinem freien Ende eine Radarmspitze, in der die mindestens eine Lastrolle gelagert ist. Ferner ist die mindestens eine Lastrolle an einem bevorzugt schwenkbar in der Radarmspitze angebrachten Rollenarm gelagert, der über eine Zug-/Druckstange für einen Initialhub betätigbar ist. Der Rollenarm bildet im Wesentlichen einen in der Radarmspitze gelagerten Hebel, der über die Zug-/Druckstange für den Initialhub betätigt werden kann. Die Radarmspitze besitzt weiter, zumindest im Bereich des Rollenarms, auf beiden Seiten jeweils eine Gleitkufe, deren Breite quer zur Längsrichtung des Radarms kleiner als eine Wandstärke der Radarmspitze im Bereich des Rollenarms ist. Zur Lagerung des Rollenarms ist die Wandstärke der Radarmspitze im Bereich des Rollenarms in der Regel deutlich größer als in den übrigen Bereichen der Radarmspitze. Es entsteht somit aus konstruktiv notwendigen Gründen ein Sprung in dem Querschnitt der Wandstärke. Dieser Sprung in der Wandstärke wurde bei der Erfindung als Ursache für eine verstärkte Reibung bzw. ein Verkanten zwischen Radarmspitze und Querbalken erkannt. Die Verwendung einer Gleitkufe auf beiden Seiten, bezogen auf die Längsrichtung der Radarmspitze, schafft die Möglichkeit, dass eine gleichmäßige Gleitbewegung der Radarmspitze auf dem Querbalken erfolgt, auch wenn ein Anstieg der Querschnittsstärke für die Seitenwand der Radarmspitze erfolgt. Die Gleitkufe stellt sicher, dass eine gleichmäßige Kraft zwischen Radarmspitze und Querträger vorliegt, und ein Verschieben von oder ein Hängenbleiben an einer leeren Palette vermieden wird.

In einer bevorzugten Weiterbildung der Erfindung besitzt die Radarmspitze an ihrem von dem Radarm fortweisenden Ende eine Einfahrkufe und/oder an ihrem zu dem Radarm weisenden Ende eine rückwärtige Einfahrkufe. Die rückwärtige Einfahrkufe wirkt als Einfahrkufe, die den Radarm anhebt, wenn die Radarme aus einer quer aufgenommenen Palette zurückgezogen werden und dabei ein Querbrett überfahren. In diesem Fall hebt die rückwärtige Einfahrkufe die Radarmspitze an.

In einer bevorzugten Weiterbildung erstrecken sich die Gleitkufen über die jeweilige Radarmspitze in Längsrichtung, insbesondere da, wo keine Einfahrkufe vorgesehen ist. Der Bereich der Radarmspitze zwischen den Einfahrkufen ist in der Regel horizontal ausgebildet. Bevorzugt ist dieser horizontale Bereich mit einer durchgehenden Gleitkufe ausgebildet. Störende Kanten und Ecken im Übergange zwischen der Gleitkufe und den Einfahrkufen werden bei dieser Ausgestaltung vermieden.

In einer weiter bevorzugten Ausgestaltung erstreckt sich die Gleitkufe über die gesamte Radarmspitze. Die gesamte untere Seite der Radarmspitze, die beim Überfahren eines Gegenstandes mit diesem in Berührung kommt, ist mit der Gleitkufe ausgestattet, so dass hier eine gleichmäßige Bewegung der Radarmspitze über den Gegenstand sichergestellt ist und keine Sprünge in der Reibung auftreten.

In einer weiter bevorzugten Ausgestaltung besitzt die Radarmspitze ein Paar von Seitenwänden, wobei die Gleitkufe jeweils außenseitig auf der Seitenwand angeordnet ist, so dass auf der Außenseite kein Absatz oder Versatz zwischen Gleitkufe und Außenwand vorliegt.

Die Gleitkufe besitzt bevorzugt zumindest abschnittsweise eine konstante Breite. Durch die konstante Breite ändert sich nicht die Auflagefläche der Gleitkufe, wodurch ein Hängenbleiben oder Verhaken der Radarmspitze bei der quer aufgenommenen Palette vermieden wird.

Ebenfalls bevorzugt erstreckt sich die Gleitkufe zumindest abschnittsweise parallel zur Längsrichtung des Radarms. Insbesondere ein mittiger horizontaler Abschnitt sowie wahlweise auch in der rückwärtigen Einfahrkufe erstreckt sich die Gleitkufe parallel zur Längsrichtung.

Ein bevorzugtes Ausführungsbeispiel der Erfindung wird nachfolgend anhand der Figuren näher erläutert. Es zeigen:
- Fign. 1a-g: den Vorgang des Einfahrens einer Radarmspitze quer in eine Palette,
- Fign. 2a: eine Radarmspitze in einer perspektivischen Ansicht vom Radarm,
- Fig. 2b: einen Schnitt entlang dem Lastrollenlager,
- Fig. 3: eine Ansicht der Radarmspitze von der Seite,
- Fig. 4: eine perspektivische Ansicht in die Radarmspitze,
- Fig. 5: eine Ansicht der geschnittenen Radarmspitzen in der Palette und
- Fig. 6: eine perspektivische Ansicht von schräg vorne auf Flurförderzeug mit Radarmen.

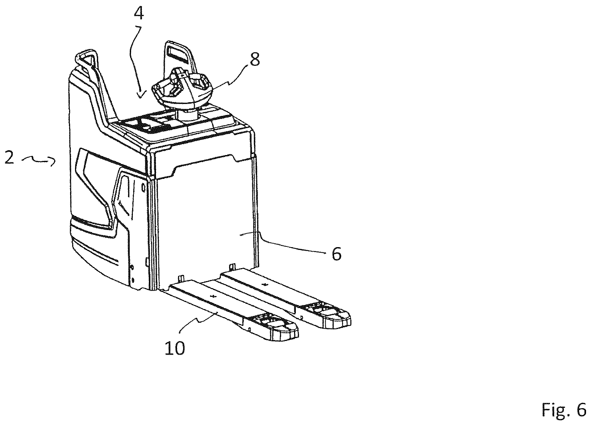

Fig. 6 zeigt eine perspektivische Ansicht eines Flurförderzeugs 2 mit einem Antriebsteil 4 und einem Lastteil 6. Das Antriebsteil 4 besitzt einen Fahrerstandplatz mit seinen Bedienelementen 8. Das Lastteil 6 besitzt ein Paar von Radarmen 10, die das Fahrzeug insgesamt abstützen und beim Aufnehmen und Absetzen einer Last einen Initialhub, über den die angehobene Last vom Boden freikommt.

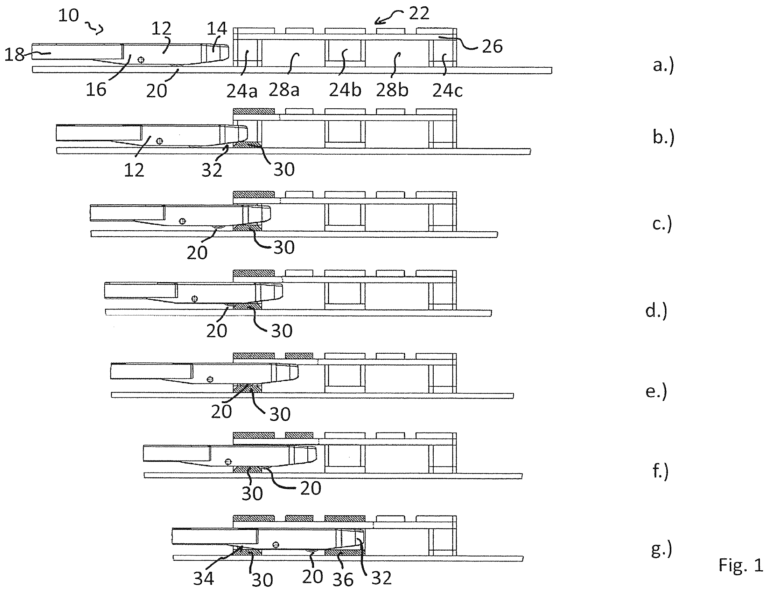

Fig. 1a zeigt einen gesamten Radarm 10 mit seiner Radarmspitze 12. Die Radarmspitze 12 besitzt eine abgerundete Spitze 14 und eine Seitenwand 16. Die Radarmspitze 12 ist an das freie Ende eines U-förmigen Radarmprofils 18 angesetzt. Die Radarmspitze 12 wird, wie das gesamte Radarmprofil 18, über ein Lastrad 20 abgestützt.

Fig. 1 zeigt ferner eine Palette 22. Die Palette 22 besitzt einen auf Blöcken 24a, 24b, 24c angeordneten Palettenträger 26. Die Blöcke 24a, 24b, 24c stützen den Palettenträger 26 und bilden Einfahröffnungen 28a, 28b. In die Einfahröffnungen 28a, 28b kann ein Flurförderzeug mit seinen Radarmen ohne Hindernis einfahren. Gelegentlich wird dies auch als Einfahren in Längsrichtung bezeichnet. Fig. 1 zeigt in seinen einzelnen Schritten die Einfahrt der Radarme in Querrichtung, in der die Blöcke 24 der Palette untereinander über Querträger 30 verbunden sind. In Fig. 1b dargestellt, besitzt die Radarmspitze 12 eine Einfahrkufe 32, die beim Einfahren in die Palette auf den Querträger 30 aufsetzt und bei einer Quereinfahrt das Radarmprofil 18 anhebt. Durch das Anheben mit der Einfahrkufe 32 wird, wie in Fig. 1c zu erkennen, auch das Lastrad 20 bereits angehoben und kommt so vom Boden frei. Bei einem weiteren Vorschub, wie in Fig. 1d gezeigt, bewegt sich das Lastrad 20 auf dem Querträger 30. In Fig. 1e befindet sich das Lastrad 20 vollständig auf dem Querträger, um dann in Fig 1f den Querträger 30 auf der Innenseite wieder zu verlassen. In diesem Bereich gleitet die Radarmspitze auf dem horizontalen Bereich hinter der Einfahrkufe 32. Erfindungsgemäß ist hier die weiter unten dargestellte Gleitkufe vorgesehen, die genau für diesen Bewegungsvorgang ein widerstandsloses Gleiten der Radarmspitze auf dem Querträger 30 sicherstellt. Fig 1g zeigt einen ebenfalls sehr wichtigen Bereich bei der Quereinfahrt, bei dem sich das Lastrad 20 zwischen dem Querträger 30 und dem mittleren Querträger 36. Das Lastrad 20 ist angehoben und besitzt keinen Kontakt. Die Einfahrkurve 32 hebt im Zusammenspiel mit dem mittleren Querträger 36 bereits den Radarm an, während dieser zudem über die rückwärtige Einfahrkufe 34 abgestützt wird. Einfahrkufe 32 und rückwärtige Einfahrkufe 34 wirken hier so zusammen, dass möglichst wenig Hubarbeiten an dem Radarm zu verrichten sind. Bevorzugt bewegt sich der Radarm gleichmäßig ohne starke Höhenänderung über die Querträger 30 und 36.

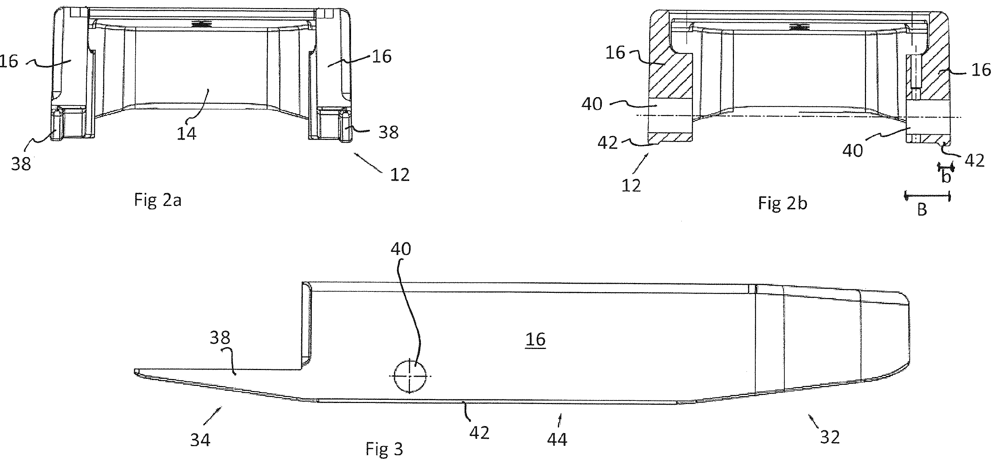

Die Fign. 2a, 2b zeigen die Radarmspitze 12 in einer Ansicht vom Radarm. Fig. 2a gibt den Blick auf die Innenseite der Radarmspitze 14 frei und zeigt die Seitenwände 16. Von den Seitenwänden 16 stehen Befestigungsvorsprünge 38 ab, die zur Verbindung der Radarmspitze mit dem freien Ende des Radarms 18 dienen.

Fig. 2b zeigt einen Schnitt im Bereich einer Lagerbohrung 40, die zur schwenkbaren Lagerung des Lastrades 20 dient. Die Schnittdarstellung in Fig. 2b zeigt auch die Gleitkufe 42, die bündig mit der Außenseite der Seitenwände 16 abschließt. Die Gleitkufe 42 besitzt eine Breite b, die kleiner als die Breite B der Seitenwand 16 im Bereich der Lagerbohrung 40 ist. Der Schnitt in Figur 2b erfolgt quer zur Längsrichtung des Radarms, wobei die Gleitkufe 42 sich parallel zur Längsrichtung erstreckt. Die Breite b der Gleitkufe ist in dem horizontalen Abschnitt also quer zur Längsrichtung. Für die Einfahrkufen 32 ist die Breite b der Kufe nicht quer zur Längsrichtung, sondern quer zur Ausrichtung der Gleitkufe. Ebenso besitzt die Gleitkufe 42' in der Radarmspitze 14 eine Breite b, quer zu Ausrichtung der Gleitkufe 42'. Grundsätzlich besitzen die Gleitkufen in allen Abschnitten die gleiche Breite b, die im Wesentlichen durch eine Anforderung an eine ausreichende Stabilität vorgegeben ist. Die Breite b kann auch in einzelnen Bereichen und Abschnitten der Gleitkufe variieren, solange eine gleichmäßige Bewegung möglich und ein Verhaken der Gleitkufen im Einsatz vermieden wird.

Fig. 3 macht deutlich, dass in dem horizontalen Abschnitt 44 zwischen der Einfahrkufe 32 und der rückwärtigen Einfahrkufe 34 die Gleitkufe 42 sich erstreckt.

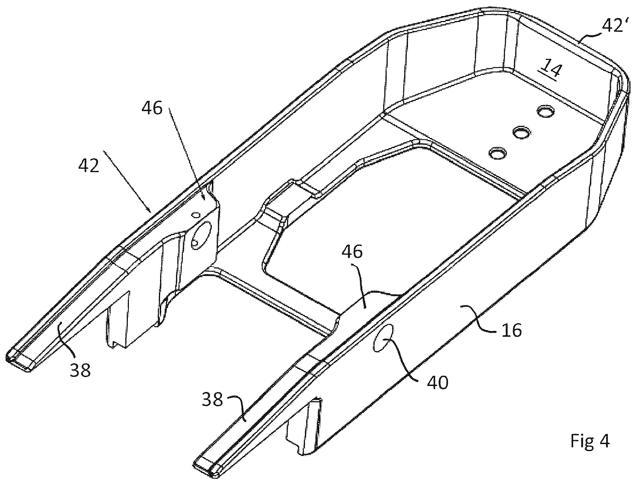

Hierbei kann unterschieden werden, ob die Gleitkufe 42 sich nur über den horizontalen Abschnitt 44 erstreckt und nach Möglichkeit glatt in die Einfahrkufen 32, 34 übergeht oder, wie bei dem in Fig. 4 gezeigten Ausführungsbeispiel, vollkommen um die Radarmspitze verläuft.

Fig. 4 zeigt die Radarmspitze in einer Ansicht von unten, wobei die umlaufende Gleitkufe 42 gut zu erkennen ist. Die Gleitkufe 42 erstreckt sich von dem Befestigungsvorsprung 38 über die Seitenwände 16 hin zur Radarmspitze 14. Auch die Radarmspitze 14, die eine geringere Wandstärke als die Seitenwand im Bereich der Lagerbohrung 40 besitzt, ist mit einer Gleitkufe 42' versehen. Auf diese Weise entsteht umlaufend an der Radarmspitze eine Gleitkufe 42, 42', die eine gleichmäßige Bewegung der Radarmspitze über einen Querträger sowohl beim Einfahren als auch beim Ausfahren aus der Palette erlaubt.

Fig. 4 macht sehr deutlich, dass ohne Gleitkufe 42 die Wandstärke sich im Bereich der Lagerbohrung 40 durch das zusätzliche Material 46 verändert, das in die Radarmspitze vorsteht. Auf diese Weise verändert sich auch das Verhalten bei einem Vorschieben oder Zurückziehen über den Querträger, der sich hier an dem zusätzlichen Material 46 oder dem daran befindlichen Lastradmechanismus verhaken kann. Die Gleitkufe verhindert dies ohne zu starke Vergrößerung der Bauhöhe der Radarmspitze.

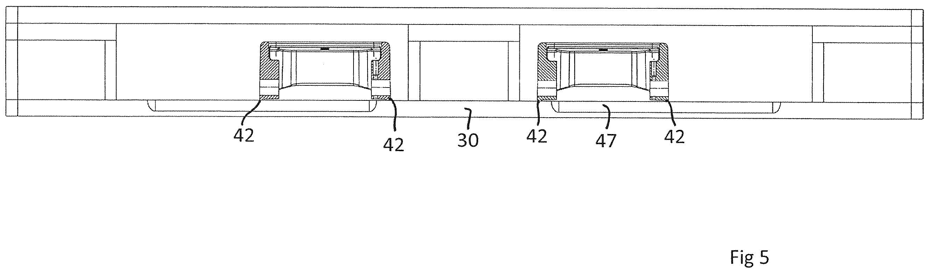

Fig. 5 zeigt die Wirkungsweise der Gleitkufe 42 im Detail. Der Querträger 30 besitzt eine Anfasung 47, die das Überfahren des Querträgers 30 erleichtert. Die Darstellung in Fig. 5 entspricht in etwa einer Einfahrtiefe von Fig. 1e, bei der die Lastrolle auf dem Querträger 30 ruht. Deutlich zu erkennen ist, dass die Gleitkufe 42 auf dem Querträger 30 aufliegt und so bei geringer Reibung das Überfahren des Querträgers 30 ermöglicht.

### Bezugszeichenliste

- 10: Radarm
- 12: Radarmspitze
- 14: Abgerundete Spitze der Radarmspitze
- 16: Seitenwand
- 18: Radarmprofil
- 20: Lastrad
- 22: Paletten
- 24a-c: Blöcke
- 26: Palettenträger
- 28a-b: Einfahröffnung
- 30: Querträger
- 32: Einfahrkufe
- 34: rückwärtige Einfahrkufe
- 36: mittlerer Querträger
- 38: Befestigungsvorsprünge
- 40: Lagerbohrung
- 42: Gleitkufe
- 42': Gleitkufe
- 44: horizontaler Abschnitt
- 46: zusätzliches Material
- 47: Anfasung

## Patentansprüche

1. Flurförderzeug (2) mit einem Antriebsteil (4) und einem gegenüber dem Antriebsteil anhebbaren Lastteil (6), das zwei Radarme (10) aufweist, die an ihrem jeweils freien Ende mindestens ein Lastrad (20) aufweisen:
- Jeder Radarm weist an seinem freien Ende eine Radarmspitze (12) auf, in der das mindestens eine Lastrad gelagert ist und die an das freie Ende eines U-förmigen Radarmprofils (18) angesetzt ist,
- Das mindestens eine Lastrad ist an einem in der Radarmspitze angebrachten Rollenarm gelagert, der über eine Zug-/Druckstange für einen Initialhub betätigbar ist,
- Die Radarmspitze (12) besitzt zumindest im Bereich des Rollenarms auf beiden Seiten jeweils eine Gleitkufe (42), deren Breite (b) quer zur Längsrichtung des Radarms (10) kleiner als eine Wandstärke (B) der Radarmspitze (12) im selben Bereich des Rollenarms ist.

2. Flurförderzeug nach Anspruch 1, **dadurch gekennzeichnet, dass** die Radarmspitze (12) an ihrem von dem Radarm (10) fortweisenden Ende eine Einfahrkufe (32) und/oder an ihrem zu dem Radarm (10) weisenden Ende eine rückwärtige Einfahrkufe (34) aufweist.

3. Flurförderzeug nach Anspruch 1 oder 2, **dadurch gekennzeichnet, dass** die Gleitkufen (42) an der jeweiligen Radarmspitze (12) mindestens eine Erstreckung in Längsrichtung der Radarme (10) aufweisen, in der die Radarmspitze (12) nicht als eine Einfahrkufe (32, 34) ausgebildet ist.

4. Flurförderzeug nach einem der Ansprüche 1 bis 3, **dadurch gekennzeichnet, dass** die Gleitkufe (42, 42') sich über die gesamte Radarmspitze (12) erstreckt.

5. Flurförderzeug nach einem der Ansprüche 1 bis 4, **dadurch gekennzeichnet, dass** die Radarmspitzen (12) jeweils ein Paar von Seitenwänden (16) aufweisen und die Gleitkufe (42) jeweils außenseitig auf der Seitenwand (16) angeordnet sind, so dass kein Absatz oder Versatz zwischen Gleitkufe (42) und Außenwand (16) vorliegt.

6. Flurförderzeug nach einem der Ansprüche 1 bis 5, **dadurch gekennzeichnet, dass** die Gleitkufe (42) zumindest abschnittsweise eine konstante Breite (b) aufweist.

7. Flurförderzeug nach einem der Ansprüche 1 bis 6, **dadurch gekennzeichnet, dass** die Gleitkufe (42) sich zumindest abschnittsweise parallel zur Längsrichtung des Radarms erstreckt.

8. Flurförderzeug nach Anspruch 7, **dadurch gekennzeichnet, dass** die Gleitkufe (42) sich in einem horizontalen Abschnitt (44) und/oder an der rückwärtigen Einfahrkufe (34) parallel zur Längsrichtung erstreckt.

## Claims

1. An industrial truck (2) with a drive part (4) and a load part (6) that can be raised relative to the drive part and that comprises two support arms (10) that comprise a load wheel (20) at their respectively free end:
- Each support arm comprises, at its free end, a support arm tip (12) in which the at least one load wheel is mounted and which is placed against the free end of a U-shaped support arm profile (18),
- The at least one load wheel is mounted on a roller arm that is attached in the support arm tip and that can be actuated via a pull/push rod for an initial lift,
- The support arm tip (12) has a runner (42) on both sides at least in the region of the roller arm, the width (b) of which runner transversely to the longitudinal direction of the support arm (10) is less than a wall thickness (B) of the support arm tip (12) in the same region of the roller arm.

2. The industrial truck according to claim 1, **characterized in that** the support arm tip (12) comprises an entry skid (32) on the end thereof facing away from the support arm (10) and/or a backward entry skid (34) on the end thereof facing the support arm (10).

3. The industrial truck according to claim 1 or 2, **characterized in that** the runners (42) on the relevant support arm tip (12) have at least one extension in the longitudinal direction of the support arms (10) in which the support arm tip (12) is not designed as an entry skid (32, 34).

4. The industrial truck according to any one of claims 1 to 3, **characterized in that** the runner (42, 42') extends over the entire support arm tip (12).

5. The industrial truck according to any one of claims 1 to 4, **characterized in that** the support arm tips (12) each comprise a pair of side walls (16) and the runners (42) are arranged in each case on the outside of the side wall (16), such that there is no step or offset between the runner (42) and the outer wall (16).

6. The industrial truck according to any one of claims 1 to 5, **characterized in that** the runner (42) has a constant width (b) at least in portions.

7. The industrial truck according to any one of claims 1 to 6, **characterized in that** the runner (42) extends parallel to the longitudinal direction of the support arm at least in portions.

8. The industrial truck according to claim 7, **characterized in that** the runner (42) extends parallel to the longitudinal direction in a horizontal portion (44) and/or at the backward entry skid (34).

## Revendications

1. Chariot de manutention (2) avec une partie d'entraînement (4) et une partie de charge (6) pouvant être soulevée par rapport à la partie d'entraînement, comportant deux longerons (10) qui présentent au moins un galet de charge (20) au niveau de chacune de leur extrémité libre :
chaque longeron présente à son extrémité libre une pointe de longeron (12),
dans laquelle est logé le au moins un galet de charge et laquelle est rapportée sur l'extrémité libre d'un profilé de longeron en U (18),
le au moins un galet de charge est logé sur un bras à galets monté dans la pointe de longeron, lequel bras à galets peut être actionné via une tige de traction/poussée pour une course initiale,
la pointe de longeron (12) possède au moins dans la région du bras à galets un patin de glissement (42) respectivement sur les deux côtés, dont la largeur (b) transversalement à la direction longitudinale du longeron (10) est inférieure à une épaisseur de paroi (B) de la pointe de longeron (12) dans la même région du bras à galets.

2. Chariot de manutention selon la revendication 1, **caractérisé en ce que** la pointe de longeron (12) comporte un patin d'entrée (32) à son extrémité s'étendant à l'opposé du longeron (10) et/ou un patin d'entrée arrière (34) à son extrémité dirigée vers le longeron (10).

3. Chariot de manutention selon la revendication 1 ou 2, **caractérisé en ce que** les patins de glissement (42) présentent au niveau de la pointe de longeron respective (12) au moins une extension dans la direction longitudinale du longeron (10), dans laquelle la pointe de longeron (12) n'est pas conçue comme un patin d'entrée (32, 34).

4. Chariot de manutention selon l'une des revendications 1 à 3, **caractérisé en ce que** le patin de glissement (42, 42') s'étend sur toute la pointe de longeron (12).

5. Chariot de manutention selon l'une des revendications 1 à 4, **caractérisé en ce que** les pointes de longeron (12) comportent respectivement une paire de parois latérales (16) et les patins de glissement (42) sont disposés respectivement sur la face extérieure de la paroi latérale (16), de sorte qu'aucun épaulement ou décalage n'existe entre le patin de glissement (42) et la paroi extérieure (16).

6. Chariot de manutention selon l'une des revendications 1 à 5, **caractérisé en ce que** le patin de glissement (42) présente au moins par sections une largeur constante (b).

7. Chariot de manutention selon l'une des revendications 1 à 6, **caractérisé en ce que** le patin de glissement (42) s'étend au moins par sections parallèlement à la direction longitudinale du longeron.

8. Chariot de manutention selon la revendication 7, **caractérisé en ce que** le patin de glissement (42) s'étend dans une section horizontale (44) et/ou au niveau du patin d'entrée arrière (34) parallèlement à la direction longitudinale.
